# EUROPEAN PATENT APPLICATION

(11) **EP 2 814 258 A1**
(43) Date of publication of application: **17.12.2014**
(21) Application number: 14170693.7
(22) Date of filing: 30.05.2014
(51) Int. Cl.: H04N 21/426, H04N 21/61

(54) **Signal receiving apparatus and signal receiving method of the same**

(30) Priority: 10.06.2013 KR 20130065712
(71) Applicant: Samsung Electronics Co., Ltd, Gyeonggi-do 443-742 (KR)
(72) Inventor: Lee, Young-jin, Gyeonggi-do (KR)
(74) Representative: Taor, Simon Edward William

(57) **Abstract**

Disclosed is a signal receiving apparatus including: a receiver configured to comprise a plurality of terminals to receive different plural satellite signals; a storage portion configured to store characteristic information therein corresponding to the plurality of satellite signals; and a controller configured to determine which of the plurality of satellite signals is received by the plurality of terminals, based on the characteristic information, and configured to control the receiver to tune the plurality of satellite signals received by the plurality of terminals, according to the determination result.

## Description

Apparatuses and methods consistent with the exemplary embodiments relate to a signal receiving apparatus and a signal receiving method of the same, and more particularly, to a signal receiving apparatus and a signal receiving method of the same for determining which of plural satellite signals is received by a plurality of terminals and for turning the plurality of satellite signals.

A signal receiving apparatus such as a television (TV) or a set-top box includes a terminal that is connected to an antenna to receive a satellite signal. If the signal receiving apparatus includes a single terminal, it may receive various signals such as a digital terrestrial signal, a digital cable signal and a digital satellite signal through the terminal. The signal receiving apparatus may provide a setting menu for a user to watch a desired satellite broadcasting. A user selects a type of an antenna connected to the terminal, e.g., selects satellite out of terrestrial, cable and satellite by using the graphic user interface (GUI) menu, and selects a name of a desired transponder from an auto tuning menu, and the signal receiving apparatus performs automatic tuning with respect to a signal of the selected transponder.

However, if the signal receiving apparatus includes a plurality of terminals, a user should connect the antenna to one of the plurality of terminals. As explained above, the menu setting for the reception of the satellite signal should be performed with respect to the respective terminals, a user should memorize which terminal has been connected to the terminal.

Additional aspects and/or advantages will be set forth in part in the description which follows and, in part, will be apparent from the description, or may be learned by practice of the invention.

Accordingly, one or more exemplary embodiments provide a signal receiving apparatus and a signal receiving method of the same for determining which of a plurality of satellite signals is received by a plurality of terminals based on characteristic information corresponding to the plurality of satellite signals and for tuning the plurality of satellite signals received by the plurality of terminals.

The foregoing and/or other aspects may be achieved by providing a signal receiving apparatus including: a receiver configured to include a plurality of terminals to receive different plural satellite signals; a storage portion configured to store characteristic information therein corresponding to the plurality of satellite signals; and a controller configured to determine which of the plurality of satellite signals is received by the plurality of terminals, based on the characteristic information, and configured to control the receiver to tune the plurality of satellite signals received by the plurality of terminals, according to the determination result.

The characteristic information may include information of respective frequency bands of the plurality of satellite signals.

The satellite signals may include a plurality of channels, and the controller determines the satellite signals by tuning at least two channels selected from the plurality of channels by referring to the characteristic information.

The controller sequentially may determine which of the plurality of satellite signals is received by the terminals.

The signal receiving apparatus further may include a signal processor configured to process the satellite signals received by the receiver; and a display unit configured to display an image thereon based on the satellite signals processed by the signal processor.

The foregoing and/or other aspects may be achieved by providing a signal receiving method of a signal receiving apparatus, the method including: receiving different plural satellite signals by using a plurality of terminals; storing characteristic information corresponding to the plurality of satellite signals; determining which of the plural satellite signals is received by the respective plural terminals, based on the characteristic information; and tuning the plurality of satellite signals received by the plurality of terminals according to determination results.

The determining may include determining which of the plurality of satellite signals is received by the terminals.

The above and/or other aspects will become apparent and more readily appreciated from the following description of the exemplary embodiments, taken in conjunction with the accompanying drawings, in which:
FIG. 1 is a block diagram of a signal receiving apparatus according to an embodiment;
FIG. 2 is a block diagram of a signal receiving apparatus according to another embodiment;
FIG. 3 illustrates an example of receiving and displaying a satellite signal by the signal receiving apparatus according to the another embodiment;
FIG. 4 is a control flowchart showing operations of the signal receiving apparatus according to the embodiment; and
FIG. 5 is a control flowchart showing operations of the signal receiving apparatus according to the another embodiment.

Reference will now be made in detail to the embodiments, examples of which are illustrated in the accompanying drawings, wherein like reference numerals refer to the like elements throughout. The embodiments are described below to explain the present invention by referring to the figures.

Below, exemplary embodiments will be described in detail with reference to accompanying drawings so as to be easily realized by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

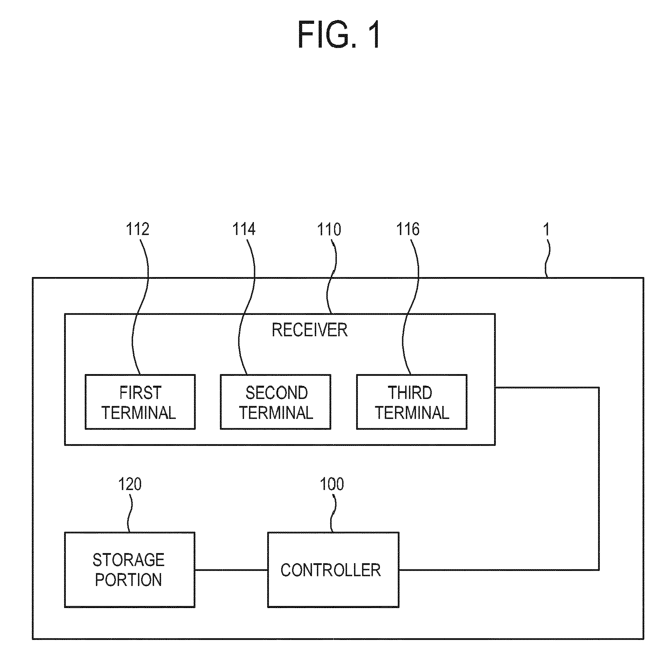

FIG. 1 is a block diagram of a signal receiving apparatus 1 according to an embodiment. As shown therein, the signal receiving apparatus according to the embodiment may include a receiver 110, a storage portion 120 and a controller 100.

The receiver 110 may include a plurality of terminals 112 to 116 to receive different plural satellite signals. FIG. 1 illustrates three terminals 112 to 116, but the terminals 112 to 116 are plurally provided and the number of the terminals is not limited. The receiver 110 receives image signals/image data in a wired or wireless manner, and transmits the image signals/image data to a signal processor 130. The receiver 110 may be provided in various manners corresponding to a received image signal and the signal receiving apparatus 1. For example, the receiver 110 may receive a radio frequency (RF) signal, or receive image signals according to standards such as composite video, component video, super video, SCART, high definition multimedia interface (HDMI), DisplayPort, unified display interface (UDI), or wireless HD. If an image signal is a satellite broadcasting signal, the receiver 110 may include a tuner to tune the satellite broadcasting signal using a channel.

The receiver 110 may receive an image signal. The receiver 110 may receive satellite broadcasting signals as image signals from a broadcasting signal transmission device (not shown), receive image signals from imaging devices such as a digital versatile disc (DVD) player or a blue-ray disc (BD) player, receive image signals from a personal computer (PC), receive image signals from a mobile device such as a smart phone or a smart pad, receive image signals through a network such as the Internet or receive image contents as image signals stored in a storage medium such as a universal serial bus (USB) stick. In another embodiment, image signals may be stored in advance in the storage portion 120 rather than received through the receiver 110.

The storage portion 120 may include a writable ROM in which data remain even upon cutoff of power to the signal receiving apparatus 1, and any change may be reflected in respect of a user. That is, the storage portion 120 may be implemented as one of a flash memory, an erasable programmable read only memory (EPROM) and an electrically erasable programmable read only memory (EEPROM). The storage portion 120 may store characteristic information therein corresponding to a plurality of satellite signals.

The controller 100 may control internal elements of the signal receiving apparatus 1. The controller 100 may determine which of the plurality of satellite signals is received by the plurality of terminals 112 to 116 based on characteristic information, and may control the receiver 110 to tune the plurality of satellite signals received by the plurality of terminals 112 to 116 according to determination results.

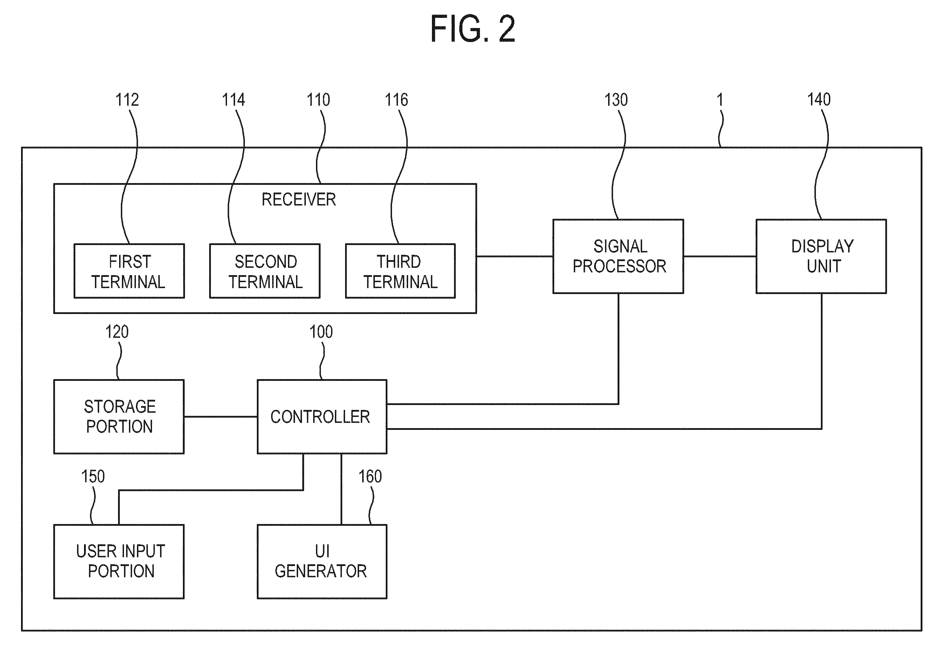

FIG. 2 is a block diagram of a signal receiving apparatus 1 according to another embodiment. As shown therein, the signal receiving apparatus 1 according to the another embodiment includes a receiver 110, a storage portion 120 and a controller 100 as the same embodiments in FIG. 1, and may include a signal processor 130, a display unit 140, a user input portion 150 and a user interface (UI) generator 160.

The signal processor 130 processes the signal provided by the receiver 110, according to a preset processing operation. For example, if a signal that is received by the receiver 110 is an image signal, the signal processor 130 processes the image signal according to the image processing operation and outputs the processed image signal to the display unit 140, and the display unit 140 displays an image thereon based on the processed image signal.

An image processing operation performed by the signal processor 130 may include, without limitation, de-multiplexing for dividing a predetermined signal into signals; decoding corresponding to an image format of image signals; de-interlacing for converting interlace image signals into progressive image signals; scaling for adjusting an image signal into a preset resolution; noise reduction for improving image quality; detail enhancement; frame refresh rate conversion, etc.

If a signal that is provided by the receiver 110 is a voice signal or a data signal, the signal processor 130 performs a processing operation consistently with the respective signals. The processing operation performed by the signal processor 130 may be determined and apply by taking into account the characteristic of the signal provided by the receiver 110, at the design phase of the image receiving apparatus 1.

The signal processor 130 may be implemented as an image processing board (not shown) that is formed by installing chipsets (not shown), memories (not shown), electronic parts (not shown) and wirings (not shown) in a printed circuit board (PCB) to perform the processing operation.

The display unit 140 may display an image thereon based on an image signal output by the signal processor 130. The display unit 140 may be implemented as various displays including, without limitation, liquid crystal, plasma, light-emitting diode, organic light-emitting diode, surface-conduction electron-emitter, carbon nano-tube, and nano-crystal.

The display unit 140 may further include additional elements depending on its embodiment type. For example, the display unit 140 as a liquid crystal display, may include a liquid crystal display (LCD) panel (not shown), a backlight unit (not shown) emitting light to the LCD panel and a panel driving substrate (not shown) driving the LCD panel.

The display unit 140 displays an image thereon based on an image signal processed by the signal processor 130. The display unit 140 employs LCD, PDP, OLED, etc. to display an image thereon. In this case, the display unit 140 may include an LCD panel, a PDP panel or an OLED panel.

The user input portion 150 transmits various control commands or information to the controller 100 by a user's manipulation and input. The user input portion 150 may be implemented as a menu key or an input panel of the signal receiving apparatus 1, or as a remote controller that is separated/spaced from the signal receiving apparatus 1. Otherwise, the user input portion 150 may be integrally formed in the display unit 140. If the display unit 140 is a touch screen, a user may touch an input menu (not shown) displayed on the display unit 140 and a preset command may be transmitted to the controller 100.

The user input portion 150 may receive a user's motion. A user's motion may include a touch input. The user input portion 150 may directly receive a user's motion, or receive information of a user's motion from an external apparatus (not shown).

The UI generator 160 may generate a UI for executing an application program. The generated UI may include a plurality of sub UIs that is provided in the form of icons and/or textsif a user selects a particular sub UI through a mobile terminal (not shown), an application program may be executed corresponding to the selected sub UI. That is, the respective sub UIs may be generated for a plurality of functions or events for executing the application program in the mobile terminal.

The UI generator 160 may have software or hardware function for generating and controlling a UI displayed on the display unit 140, and such function may be performed through the controller 100. That is, the UI generator 160 may be implemented as an additional chipset or an additional microprocessor.

The storage portion 120 may store characteristic information therein corresponding to a plurality of satellite signals, and the characteristic information may include information of frequency bands of the plurality of satellite signals.

Satellite signals that may be received by the receiver 110 may be transmitted via a plurality of channels. The controller 100 may tune at least two channels selected from the plurality of channels based on characteristic information to determine the satellite signals. The controller 100 may sequentially determine which of the plurality of satellite signals is received by the terminals 112 to 116.

The controller 100 may control internal elements of the signal receiving apparatus 1, and automatically tune a desired satellite signal by determining whether the desired satellite signal is input to the respective terminals 112 to 116 of the receiver 110, to thereby reduce inconvenience in setting the terminals 112 to 116 and enhance convenience.

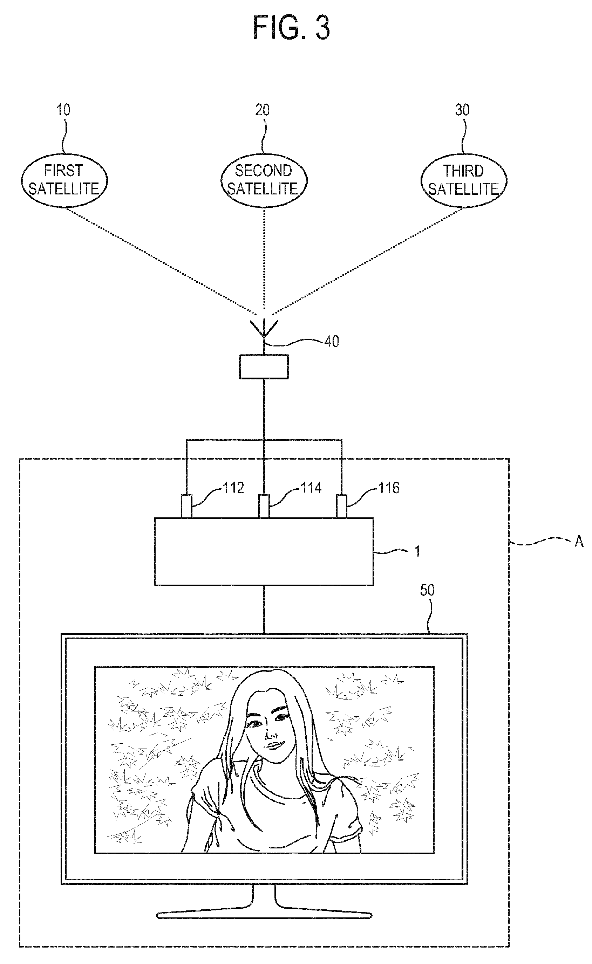

FIG. 3 illustrates an example of receiving and displaying a satellite signal by the signal receiving apparatus 1 according to the another embodiment.

As shown therein, a satellite antenna 40, which may receive signals from a first satellite 10, a second satellite 20, and a third satellite 30 may receive a satellite signal and transmit the satellite signal to the terminals 112 to 116 of the signal receiving apparatus 1. In FIG. 3, the single satellite antenna 40 receives a satellite signal, but is not limited thereto. Alternatively, a plurality of antenna 40 may be connected to the terminals 112 to 116, respectively, or a single satellite antenna 40 may be connected to a plurality of terminals 112 to 116.

As shown in FIG. 3, a user may not know to which of the terminals 112 to 116 a signal of the first satellite signal 10 is input. If a user remembers the terminal, he/she may connect the terminal. If a user's memory or recollection is incorrect, the setting should be performed again and reset service may be required.

For example, if a user desires to watch a soccer channel by inputting signals of the first satellite 10 to the signal receiving apparatus 1 having a plurality of terminals 112 to 116, characteristic information corresponding to a plurality of satellite signals stored in the storage portion 120 of the signal receiving apparatus 1, i.e., information of frequency bands of a plurality of channels out of the first satellite 10 is tuned with respect to the first terminal 112. If three channels are tuned and it is determined that two or more channels are input to the first terminal 112, the controller 100 may determine that the signal of the first satellite 10 is input to the first terminal 112 and tune the signal of the first satellite 10 transmitted to the first terminal 112 and display the desired soccer channel on the display unit 140. If a user selects a desired channel through a remote controller later, the controller 100 determines which of the satellite signal is transmitted based on the stored characteristic information, and tunes three channels out of the determined satellite signals, with respect to the terminals 112 to 116, and receives and tunes the satellite signal that is received by the terminal to which two or more signals are input, and processes the desired channel and displays the desired channel on the display unit 140. The controller 100 may sequentially determine which of the plurality of satellite signals is received by one of the terminals 112 to 116.

In A in FIG. 3, the signal receiving apparatus 1 and the display apparatus 50 are separated from each other, but not limited thereto. Alternatively, the signal receiving apparatus 1 may have the display unit 140 therein, or the signal receiving apparatus 1 and the display unit 140 may be separated from each other. There is no limitation in providing the signal receiving apparatus 1 and the display apparatus 50 separately, or providing a single body including the signal receiving apparatus 1 and the display apparatus 50.

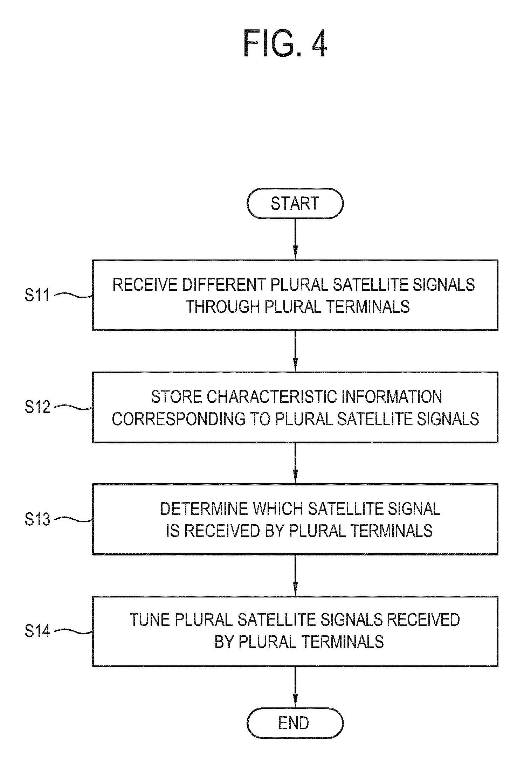

FIG. 4 is a control flowchart showing operations of the signal receiving apparatus 1 according to an aspect of the embodiment. As shown therein, operations of the signal receiving apparatus 1 according to the embodiment will be described.

Different plural satellite signals are received through the plurality of terminals 112 to 116 (S11). The characteristic information corresponding to the plurality of satellite signals is stored (S12). Based on the characteristic information, it is determined which of the plurality of satellite signal is received by the plurality of terminals 112 to 116 (S13). According to the determination result, the plurality of satellite signals received by the plurality of terminals 112 to 116 is tuned (S14).

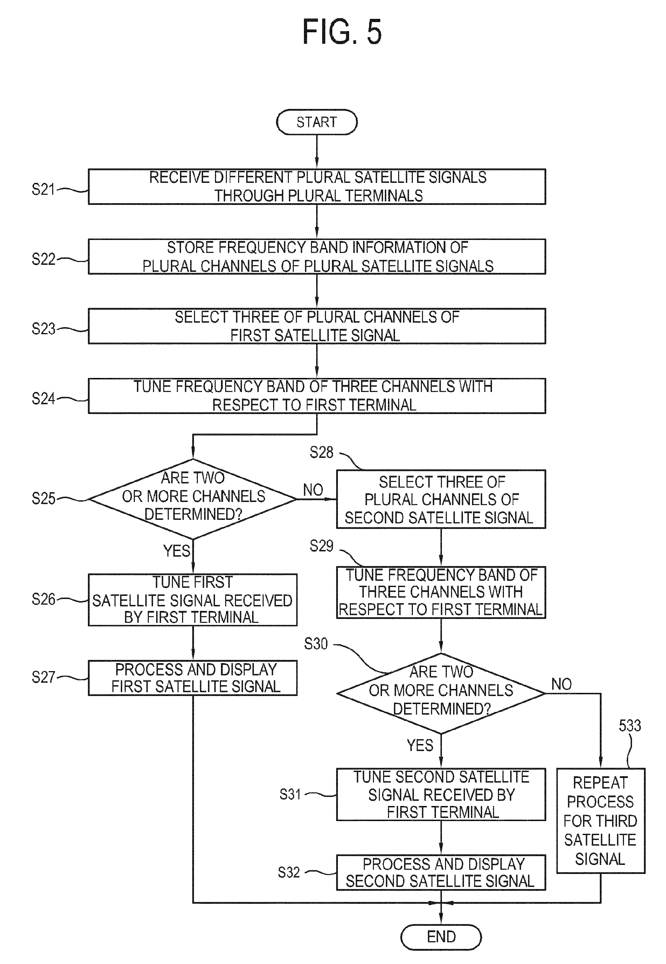

FIG. 5 is a control flowchart showing operations of the signal receiving apparatus 1 according to the another embodiment. As shown therein, operations of the signal receiving apparatus 1 according to the embodiment will be described.

Different plural satellite signals are received through the plurality of terminals 112 to 116 (S21). The frequency band information of the plurality of channels of the plurality of satellite signals is stored (S22). If the plurality of satellite signals is received, three of the plurality of channels of the first satellite signal are selected (S23). The frequency band of the three channels of the first satellite signal is tuned with respect to the first terminal 112 (S24). It is determined whether two or more of the three channels of the first satellite signal are input to the first terminal 112 (S25). If it is determined that two or more channels of the first satellite signal are input to the first terminal 112, the first satellite signal received by the first terminal 112 is tuned (S26). The channel of the tuned first satellite signal is processed, and the desired channel is displayed on the display unit 140 (S27). If it is determined that two or more channels are not input to the first terminal 112, three of the plurality of channels of the second satellite signal are selected (S28). The frequency band of the three channels of the second satellite signal is tuned with respect to the first terminal 112 (S29). It is determined whether two or more of the three channels of the second satellite signal are input to the first terminal 112 (S30). If it is determined that the two or more channels of the second satellite signal are input to the first terminal 112, the second satellite signal received by the first terminal 112 is tuned (S31). The channel of the tuned first satellite signal is processed, and the desired channel is displayed on the display unit 140 (S32). If it is determined that two or more channels of the second satellite signal are not input to the first terminal 112, the aforementioned process may be repeated with respect to a third satellite signal (S33).

The signal receiving apparatus 1 may determine which of the plurality of satellite signals is received by the plurality of terminals 112 to 116, based on the characteristic information of the plurality of satellite signals, and tune the plurality of satellite signals received by the plurality of terminals 112 to 116. Accordingly, the signal receiving apparatus including the plurality of terminals 112 to 116 may automatically recognize the connection of signals and perform the auto tuning to the signals to thereby reduce user's inconvenience which may result from connection of terminals.

As described above, the signal receiving apparatus and the signal receiving method of the same according to the embodiments may determine which of the plurality of satellite signals is received by the plurality of terminals based on the characteristic information of the plurality of satellite signals, and tune the plurality of satellite signals received by the plurality of terminals. Accordingly, the signal receiving apparatus including the plurality of terminals may automatically recognize the connection of signals and perform the auto tuning to the signals to thereby reduce user's inconvenience which may result from connection of terminals.

Some example embodiments of the disclosure can also be embodied as a computer readable medium including computer readable code/instruction to control at least one component of the above-described example embodiments. The medium may be any medium that can storage and/or transmission the computer readable code.

Aspects of the above-described example embodiments may be recorded in non-transitory computer-readable media including program instructions to implement various operations embodied by a computer. The media may also include, alone or in combination with the program instructions, data files, data structures, and the like. The program instructions recorded on the media may be those specially designed and constructed for the purposes of the example embodiments, or they may be of the kind well-known and available to those having skill in the computer software arts. Examples of non-transitory computer-readable media include magnetic media such as hard disks, floppy disks, and magnetic tape; optical media such as CD ROM disks and DVDs; magneto-optical media such as optical disks; and hardware devices that are specially configured to store and perform program instructions, such as read-only memory (ROM), random access memory (RAM), flash memory, and the like. The media may be transfer media such as optical lines, metal lines, or waveguides including a carrier wave for transmitting a signal designating the program command and the data construction. Examples of program instructions include both machine code, such as produced by a compiler, and files containing higher level code that may be executed by the computer using an interpreter. The described hardware devices may be configured to act as one or more software modules in order to perform the operations of the above-described example embodiments, or vice versa. In addition, a non-transitory computer-readable storage medium may be distributed among computer systems connected through a network and computer-readable codes or program instructions may be stored and executed in a decentralized manner. In addition, the computer-readable storage media may also be embodied in at least one application specific integrated circuit (ASIC) or Field Programmable Gate Array (FPGA). Some or all of the operations performed according to the above-described example embodiments may be performed over a wired or wireless network, or a combination thereof.

Although a few exemplary embodiments have been shown and described, it will be appreciated by those skilled in the art that changes may be made in these exemplary embodiments without departing from the principles of the invention, the range of which is defined in the appended claims and their equivalents.

## Claims

1. A signal receiving apparatus comprising:
a receiver configured to comprise a plurality of terminals arranged to receive different plural satellite signals;
a storage portion configured to store characteristic information therein corresponding to the plurality of satellite signals; and
a controller configured to determine which of the plurality of satellite signals is received by the plurality of terminals, based on the characteristic information, and configured to control the receiver to tune the plurality of satellite signals received by the plurality of terminals, according to the determination result.

2. The signal receiving apparatus of claim 1, wherein the characteristic information comprises information of respective frequency bands of the plurality of satellite signals.

3. The signal receiving apparatus of claim 1 or 2, wherein the satellite signals comprise a plurality of channels, and the controller is arranged to determine the satellite signals by tuning at least two channels selected from the plurality of channels by referring to the characteristic information.

4. The signal receiving apparatus one of claims 1 to 3, wherein the controller is arranged to sequentially determine which of the plurality of satellite signals is received by the terminals.

5. The signal receiving apparatus one of claims 1 to 4, further comprising a signal processor configured to process the satellite signals received by the receiver; and
a display unit configured to display an image thereon based on the satellite signals processed by the signal processor.

6. A signal receiving method of a signal receiving apparatus, the method comprising:
receiving different plural satellite signals by using a plurality of terminals;
storing characteristic information corresponding to the plurality of satellite signals;
determining which of the plural satellite signals is received by the respective plural terminals, based on the characteristic information; and
tuning the plurality of satellite signals received by the plurality of terminals according to determination results.

7. The method of claim 6, wherein the characteristic information comprises information of respective frequency bands of the plurality of satellite signals.

8. The method of claim 6 or 7, wherein the satellite signals comprise a plurality of channels, and the determining comprises determining the satellite signals by tuning at least two channels selected from the plurality of channels by referring to the characteristic information.

9. The method one of claim 6 to 8, wherein the determining comprises sequentially determining which of the plurality of satellite signals is received by the terminals.

10. The method one of claim 6 to 9, wherein the tuning further comprises displaying an image by processing the received satellite signals.

11. A non-transitory computer-readable recording medium having embedded thereon a computer program for the method of any one of claims 6 to 10.
